# EUROPÄISCHE PATENTSCHRIFT

(11) **EP 1 266 560 B1**
(45) Veröffentlichungstag und Bekanntmachung des Hinweises auf die Patenterteilung: **24.05.2006**
(21) Anmeldenummer: 02007963.8
(22) Anmeldetag: 10.04.2002
(51) Int. Cl.: A01D 75/18

(54) **Verfahren und Vorrichtungen zum Schutz der Arbeitsaggregate landwirtschaftlicher Arbeitsmaschinen**
Method and devices for protecting working implements of agricultural machines
Procédé et dispositifs de protection pour unités de travail de machines agricoles

(30) Priorität: 13.06.2001 DE 10128519
(43) Veröffentlichungstag der Anmeldung: 18.12.2002
(73) Patentinhaber: CLAAS Saulgau GmbH, 88348 Bad Saulgau (DE)
(72) Erfinder: Geng, Manfred, 88348 Bad Saulgau (DE)

(56) Entgegenhaltungen:
- DE-A- 3 332 578
- DE-A- 19 800 524
- US-A- 5 521 514

## Beschreibung

Die Erfindung betrifft ein Verfahren und Vorrichtungen zum Schutz der Arbeitsaggregate landwirtschaftlicher Arbeitsmaschinen gemäß dem Oberbegriff des Anspruchs 1. Ein derartiges Verfahren bzw. Vorrichtung ist bereits aus DEA-3332578 bekannt.

Bei landwirtschaftlichen Arbeitsmaschinen kommt es in der Praxis immer wieder vor, dass außergewöhnlich belastete Komponenten durch Materialermüdungen oder durch Kollision mit Hindernissen brechen und weggeschleudert werden. Diese Komponenten bzw. ihre Bruchteile sowie andere Fremdkörper können dann bei den nachfolgenden Maschinen schwerwiegende kostspielige Schäden und Betriebsstörungen verursachen. Als Beispiel sollen hier die Kreiselheumaschinen dienen, bei denen es immer wieder vorkommt, dass Zinken brechen oder sogar aus ihrer Verankerung an den Zinkenträgerarmen gerissen und weggeschleudert werden. Spätestens beim Zusammenschwaden des stängeligen Erntegutes werden diese vorwiegend aus metallischen Werkstoffen bestehenden Komponenten direkt in den Arbeitsbereich des Feldhäckslers gebracht. Nach dem Durchlaufen der Querförderschnecke der Aufsammeleinrichtung und dem Weitertransport durch die Einzugstrommeln erreichen die Fremdkörper die Häckseltrommel. Dabei verursachen sie sowohl an den Einzugstrommeln als auch an der Häckseltrommel bedeutende kostspielige Schäden (meist Totalschäden).

Aus dem Stand der Technik ist eine Vorrichtung bekannt, bei der in die Einzugswalzen des Feldhäckslers ein Metalldetektor integriert ist. Die Integration dieses Metalldetektors hat zur Folge, dass die Einzugswalzen aus einem speziellen teuren nicht-magnetischen Werkstoff bestehen müssen, der zu erheblich höheren Herstellungskosten des Feldhäckslers fuhrt. Nach dem Anschlagen des Metalldetektors wird ein komplexer Steuerungsvorgang in Gang gesetzt. Die Einzugswalzen ändern ihre Drehrichtung, das Erntegut und der Fremdkörper werden in Richtung der Querförderschnecke der Aufsammeleinrichtung gefördert, die Aufsammeleinrichtung wird angehoben, das Erntegut und der Fremdkörper werden ausgeworfen, der Feldhäcksler legt ein Stück Weg in Arbeitsrichtung zurück, die Aufsammeleinrichtung wird abgesenkt, die Drehrichtung der Einzugswalzen wird erneut geändert und der Feldhäcksler nimmt seine bestimmungsgemäßen Aufgaben wieder wahr.

In den letzten Jahren sind die Arbeitsgeschwindigkeiten der landwirtschaftlichen Arbeitsmaschinen stark gestiegen, daher müssen beispielsweise die Einzugswalzen nach dem Detektieren eines Fremdkörpers schneller gebremst werden. Dabei wurden die bekannten Nachteile dieses Schutzsystems für die Häckseltrommel noch verstärkt. Es treten enorme Belastungsspitzen an den Antrieben für die Einzugswalzen auf und mitunter reichen auch diese verstärkten Bemühungen nicht aus, um die Häckseltrommel wirksam vor dem Fremdkörper zu schützen.

Der Erfindung liegt deshalb die Aufgabe zugrunde, die Arbeitsaggregate von landwirtschaftlichen Arbeitsmaschinen vor schädigenden Fremdkörpern zu schützen.

Erfindungsgemäß wird die Aufgabe durch ein Verfahren mit den kennzeichnenden Merkmalen des Anspruchs 1 und durch Vorrichtungen mit den kennzeichnenden Merkmalen des Anspruches 9 gelöst.

Dadurch, dass an mindestens einer der landwirtschaftlichen Arbeitsmaschinen wenigstens ein Signalgeber vorhanden ist, der mindestens ein Signal generiert, das direkt oder indirekt auf die Signalempfangseinheit an der wenigstens einen landwirtschaftlichen Arbeitmaschine übertragen wird, gelingt es, die Arbeitsaggregate der landwirtschaftlichen Arbeitsmaschine besser zu schützen. Da das Signal die Wegstrecke schneller zurücklegt, als die nachfolgende zu schützende Maschine fährt, sind die Zeiten zum Auslösen eines Schutzmechanismus größer als bei den herkömmlichen Maschinen. Im Falle des Feldhäckslers bedeutet das, dass der Schutzmechanismus so variiert werden kann, dass die schädigenden Belastungsspitzen und Fremdkörper im Einzugsbereich nicht mehr auftreten. Desweiteren kann auf das teure Spezialmaterial für die Einzugswalzen verzichtet werden, da ein Metalldetektor am Feldhäcksler nicht mehr nötig ist. Die Steuerung und Konstruktion für die der Häckseltrommel vorgeordneten Komponenten kann auch stark vereinfacht werden. Es reicht, die Aufsammeleinrichtung kurz vor der detektierten Stelle anzuheben, dabei kann die Arbeitsgeschwindigkeit beibehalten werden, nach dem Durchfahren des Bereiches mit dem potentiell schädigenden Fremdkörper wird die Aufsammeleinrichtung wieder gesenkt und das nicht maschinenschädigende Erntegut aufgenommen und verarbeitet.

In besonders vorteilhafter Weise wird das Signal drahtlos übertragen. Bei der Verwendung von elektromagnetischen Wellen (z. B. Licht, Schall) als Signalüberträger können die landwirtschaftlichen Arbeitsmaschinen mit einem größeren räumlichen Abstand arbeiten als das bei einer Übertragung des Signals unter Zuhilfenahme von aufwendigen Verdrahtungen der Fall wäre. Zudem funktioniert die Signalübertragung mittels elektromagnetischer Wellen zuverlässiger und wartungsärmer.

In einer bevorzugten Ausführungsform handelt es sich bei der Detektiereinrichtung um eine Fremdkörperortungseinrichtung, mit deren Hilfe die die Arbeitsorgane der landwirtschaftlichen Arbeitsmaschine, beispielsweise einer Erntegutbergungsmaschine (Feldhäcksler, Mähdrescher usw.), potentiell schädigenden Fremdkörper wie z. B. große Steine und metallhaltige Gegenstände detektiert werden können.

In besonders vorteilhafter Weise ist das Signal georeferenziert, da dann im Falle einer voll automatisierten Schutzeinrichtung die potentiell geschädigte Arbeitsmaschine nur noch ihre relative oder absolute Position bestimmen muss, um so die erforderlichen Steuerung- und/oder Regelungsmechanismen zu starten. Im Falle einer semiautomatisierten Steuerung bzw. Regelung kann so der Benutzer die erforderlichen Steuerungs- und/oder Regelungsmechanismen zielgerichtet vornehmen.

In einer besonders vorteilhaften Ausführungsform löst das von der mindestens einen landwirtschaftlichen Arbeitsmaschine wenigstens eine generierte Signal bei der landwirtschaftlichen Arbeitmaschine wenigstens einen Steuerungsvorgang und/oder mindestens einen Regelungsvorgang aus. So gelingt es, den Schutzmechanismus vollständig zu automatisieren.

In einer weiteren besonders vorteilhaften Ausführungsform beinhaltet der wenigstens eine Steuerungsvorgang und/oder mindestens eine Regelungsvorgang das zeitlich und räumlich auf den Ursprungsort des ausgelösten Signals abgestimmte Einschalten eines Elektromagneten. Mit Hilfe des Elektromagneten ist eine automatische Entfernung von zumindest teilweise metallischen Fremdkörpern möglich.

In einer besonders vorteilhaften Weiterbildung der Erfindung verfügt die Signalverarbeitung des mindestens einen Steuerungs- und/oder Regelungsvorganges über eine Lernphase. Diese Lernphase soll zu einer Anpassung des Steuerungs- und/oder Regelungsalgorithmus an veränderte Parameter wie z. B. die Länge des Vorsatzgerätes führen, so dass bei einem kürzeren Vorsatzgerät als dem für die ursprüngliche Programmierung gewählten, das Ausheben der Aufsammeleinrichtung später und das Absenken früher erfolgt. Insbesondere soll auch bei dem Auftreten des unerwünschten Einziehens von Fremdkörpern durch die Arbeitsorgane der nachgeordneten landwirtschaftlichen Erntemaschine, der Steuerungs- und/oder Regelungsalgorithmus zur neuerlichen Erzielung des gewünschten Ergebnisses korrigiert werden können. Mittels einer derartigen Lernphase gelingt es, die Koordinaten der Position des Fremdkörpers mit geringeren Toleranzen zu versehen. Dadurch kann ein höherer Flächenertrag erzielt werden.

In einer vorteilhaften Weiterbildung der Erfindung sind die die landwirtschaftliche Arbeitsmaschine potentiell schädigenden Teile der wenigstens einen landwirtschaftlichen Arbeitsmaschine mit einem nicht-leitenden Material ummantelt. So wird eine Konstruktion ermöglicht, bei der Strom als Indikator für die Unversehrtheit der Teile der vorgeordneten landwirtschaftlichen Arbeitsmaschine dienen kann. Die stromleitenden Teile der die landwirtschaftliche Arbeitsmaschine schädigenden Teile werden in einer solchen erfindungsgemäßen Konstruktion mittels stromführender Leitungen mit mindestens einer Messeinrichtung und der Sendeeinheit verbunden. Die Sendeeinheit sendet bei einer Unterbrechung der stromführenden Leitung ein Warnsignal an die landwirtschaftliche Arbeitsmaschine. Bei einer solchen Konstruktion kann unter Umständen ganz auf die Verwendung von handelsüblichen Metalldetektoren verzichtet werde. Auch ist es möglich, das Material der die landwirtschaftliche Arbeitsmaschine potentiell schädigenden Teile aus oberflächlich nicht-metallischem Material zu wählen und nur eine dünne stromführende Leitung einzuziehen. Dadurch können auch wesentlich elastischere sowie leichtere, schonendere Arbeitsverfahren an der vorgeordneten Arbeitsmaschine verwendet werden als dies heute üblicherweise der Fall ist.

In einer weiteren erfindungsgemäßen Ausführungsform ist das Signal ein Funksignal. Damit kann der Benutzer in den Besitz einer Insellösung gelangen, das heißt, es entstehen keine weiteren dauerhaften Abhängigkeiten von anderen Komponenten, deren Verfügbarkeit nicht in seinem Einflussbereich liegen. Bei einer derartigen Ausführungsform sollten an der landwirtschaftlichen Arbeitsmaschine wenigstens zwei räumlich voneinander getrennte Signalempfangseinheiten vorhanden sein, so dass die Position des Signals eineindeutig bestimmt werden kann.

In einer vorteilhaften Ausführungsform handelt es sich bei dem zu übertragenden Signal um ein GPS-Signal. Durch die Verwendung von GPS-Signalen greift man auf internationale Standards zurück, so dass eine übermäßige Abhängigkeit von Hersteller-Standards vermieden werden kann.

Vorteilhafte Ausgestaltungen sind Gegenstand weiterer Unteransprüche und werden nachfolgend anhand von in Zeichnungen dargestellten Ausführungsbeispielen näher erläutert.

Es zeigen
- Figur 1: eine Draufsicht einer erfindungsgemäßen Sicherheitsvorrichtung
- Figur 2: eine Draufsicht einer weiteren erfindungsgemäßen Sicherheitsvorrichtung
- Figur 3: eine Detailansicht einer erfindungsgemäßen Sicherheitsvorrichtung
- Figur 4: eine Ausschnittsvergrößerung einer erfindungsgemäßen Sicherheitsvorrichtung aus Figur 3
- Figur 5: eine Ausschnittsvergrößerung einer erfindungsgemäßen Sicherheitsvorrichtung aus Figur 3
- Figur 6: eine Draufsicht einer weiteren erfindungsgemäßen Sicherheitsvorrichtung

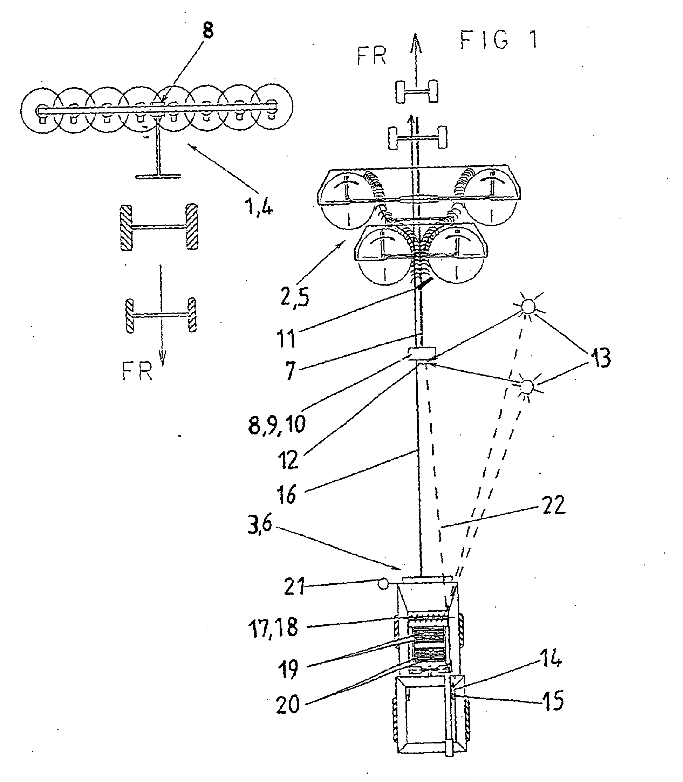

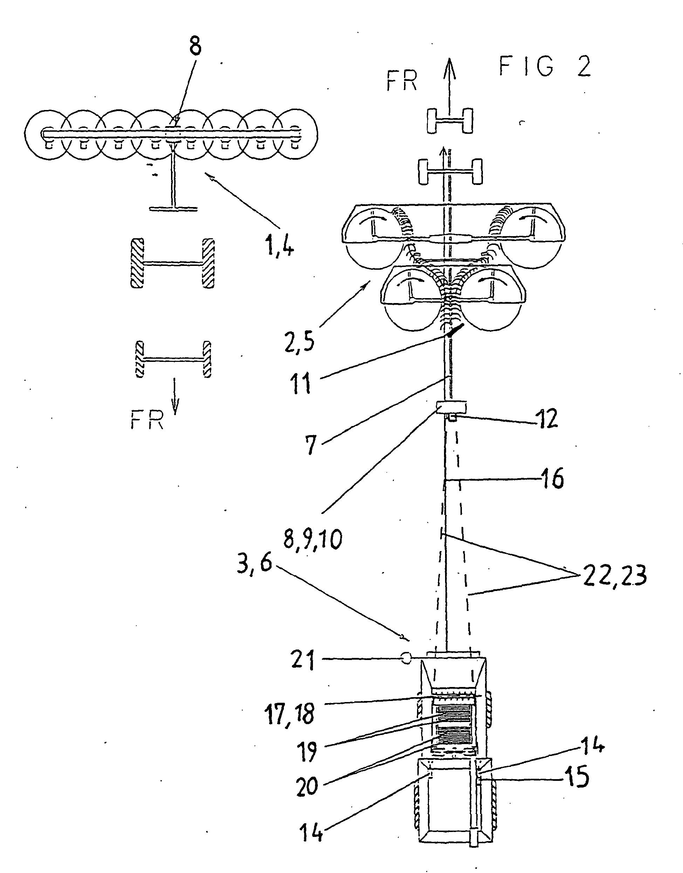

In den Figuren 1 und 2 sind verschiedene landwirtschaftliche Arbeitsmaschinen (1, 2, 3) dargestellt. Diese Arbeitsmaschinen (1, 2, 3) sind in diesen Ausführungsbeispielen Bestandteile einer Raufuttererntekette - nämlich ein Wender (4), ein Schwader (5) und ein Feldhäcksler (6), die zeitlich nacheinander denselben Schlag bearbeiten. In Figur 1 sind an der landwirtschaftlichen Arbeitsmaschine (2), dem Schwader (5) zum Zusammenrechen des Erntegutes, die der zu schützenden Arbeitsmaschine (3), dem Feldhäcksler (6) zum Aufnehmen und Zerkleinern des Erntegutes mit den vor den Fremdkörpern zu schützenden Arbeitsorganen - den Einzugswalzen und der Häckseltrommel - , direkt voranfährt, an einem Hauptrahmen als Rechkreisel ausgeführte Arbeitsorgane angeordnet. Im rückwärtigen Bereich des Hauptrahmens ist hinter den als Rechkreiseln ausgeführten Arbeitsorganen an einer Haltevorrichtung (7) in an sich bekannter Weise eine Detektiereinrichtung (8) als Fremdkörperortungseinrichtung (9), beispielsweise ein Metalldetektor 10), befestigt, mit deren Hilfe das gesamte zusammengerechte Erntegut auf Fremdkörper untersucht wird. Nach dem Detektieren eines potentiell die zu schützende Arbeitsmaschine (3) schädigenden metallhaltigen Fremdkörpers (11) durch die Detektiereinrichtung (8) der landwirtschaftlichen Arbeitsmaschine (2) meldet ein Signalgeber (12) die aktuelle Position, die unter Zuhilfenahme der Positionen der Satelliten (13) ermittelt wird, im GPS-Format an eine an der zu schützenden landwirtschaftlichen Arbeitsmaschine (3) angebrachte Signalempfangseinheit (14).
Der Aufenthaltsort der landwirtschaftlichen Arbeitsmaschine (3) wird unter Zuhilfenahme der Positionen der Satelliten (13) ermittelt. Aus den von der Signalempfangseinheit (14) erhaltenen Daten über die Position des Fremdkörpers (11) und dem Aufenthaltsort der landwirtschaftlichen Arbeitsmaschine (3) wird die noch zurückzulegende Wegstrecke zwischen dem detektierten metallhaltigen Fremdkörper (11) und der landwirtschaftlichen Arbeitsmaschine (3) mit Hilfe einer Auswerteeinheit (15) errechnet. Unter Berücksichtigung der Geschwindigkeit der landwirtschaftlichen Arbeitsmaschine (3) wird ein Steuerungsvorgang (16) durchgeführt, bei dem steuerbare Arbeitsorgane (17), in diesem Fall die Aufsammeleinrichtung (18) des Feldhäckslers (6), kurz vor dem detektierten metallhaltigen Fremdkörper (11) angehoben und nach dem Passieren der Koordinaten, die für den metallhaltigen Fremdkörper (11) ermittelt wurden, wieder abgesenkt wird. Dadurch gelingt es, die Einzugsorgane (19) und die Arbeitsaggregate (20) des Feldhäckslers (6) wirksam vor dem metallhaltigen Fremdkörper (11) zu schützen. Es liegt im Rahmen der Erfindung, dass schon an dem dem Schwader (5) vorgeordneten Wender (4) eine Detektiereinrichtung (8) im rückwärtigen Bereich des Hauptrahmens angebracht ist mit deren Hilfe die gesamte Arbeitsbreite des Wenders (4) in analoger Weise zu dem am Schwader (5) beschriebenen Beispiel überwacht wird. In einem solchen Fall kann in besonders vorteilhafter Weise der dem Wender (4) nachgeordneten landwirtschaftlichen Arbeitsmaschine (2) im Frontbereich ein Elektromagnet (21) zugeordnet sein, der bereits detektierte metallhaltige Fremdkörper (11) noch vor Erreichen des Arbeitsbereiches der landwirtschaftlichen Arbeitsmaschine (2) zuverlässig entfernt.

Alternativ zu diesem Steuerungsvorgang (16) kann auch bei Erreichen der für den metallhaltigen Fremdkörper (11) ermittelten Koordinaten ein im vorderen Bereich der landwirtschaftlichen Arbeitsmaschine (3) angebrachter starker Elektromagnet (21) aktiviert werden, der in der Lage ist, metallhaltige Fremdkörper (11) zuverlässig aus dem Arbeitsbereich des Feldhäckslers (6) zu ziehen, bevor diese in die Aufsammeleinrichtung (18) gelangen.

In Figur 2 ist ebenfalls eine Raufuttererntekette dargestellt. Hier befindet sich an der landwirtschaftlichen Arbeitsmaschine (2) ein Signalgeber (12), der nach dem Detektieren eines metallhaltigen Fremdkörpers (11) ein Signal (22) aussendet. Das Signal (22) kann beispielsweise ein Funksignal (23) sein. Die Positionsbestimmung erfolgt an der landwirtschaftlichen Erntemaschine (3), die in diesem Fall über mindestens zwei beabstandete Signalempfangseinheiten (14) verfügen muss. Aus den zeitlichen Differenzen beim Auftreffen des Signals (22) auf die mindestens zwei Signalempfangseinheiten (14) bestimmt eine Auswerteeinheit (15) die Koordinaten des detektierten metallhaltigen Fremdkörpers (11). Die Folgesteuerung geschieht analog zu der in Figur 1 beschriebenen Steuerung (16). In einer vorteilhaften hier nicht näher dargestellten Weiterbildung der Erfindung erfolgt die Optimierung der Steuerung unter Integration einer Lernphase, z. B. in Form von Algorithmen für neuronale Netze in die Auswert- und Steuerungsprozesse (15, 16). Diese Algorithmen für neuronale Netze lassen beispielsweise auch umfangreichere Veränderungen an den sonst für die Steuerung benötigten Parametern (z. B. Länge der Aufsammeleinrichtung) zu, ohne dass eine Neuprogrammierung der Steuerung erfolgen muss.

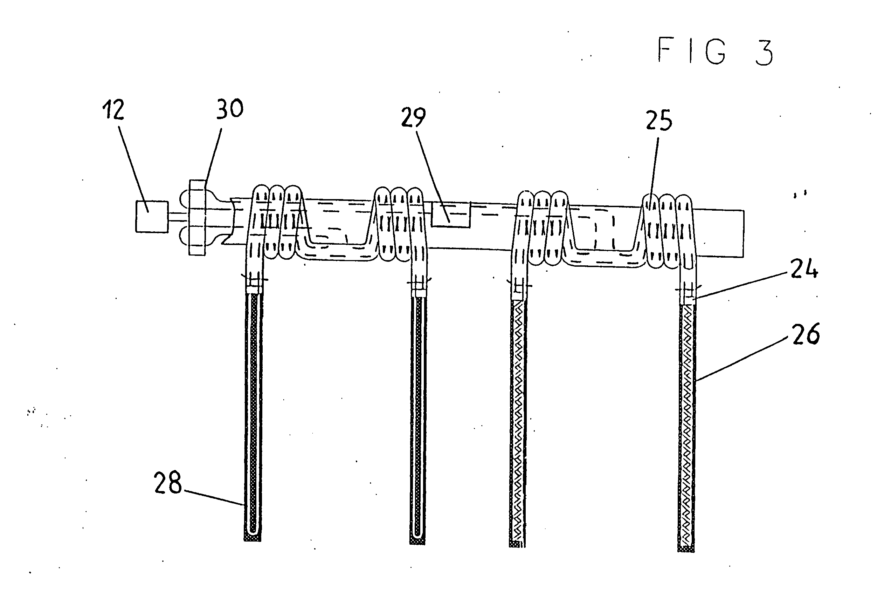

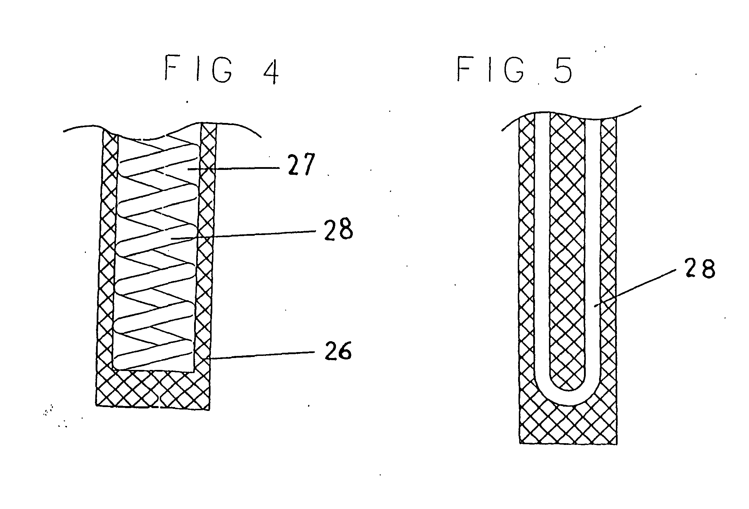

Für landwirtschaftliche Arbeitsmaschinen (1, 2), die über Bauteile verfügen, die die nachfolgende Maschine (3) schädigen können, beispielsweise Wender (4) und Schwader (5), kann ein Signal (22) auch ohne Zuhilfenahme eines Metalldetektors (10) durch die Modifizierung der potentiell schädigenden Bauteile (24) - im Falle von Wendern (4) und Schwadern (5) z. B. der Zinken (25) - generiert werden. Eine mögliche in den Figuren 3, 4 und 5 dargestellte Ausführungsform ist ein Zinken (25), der in diesem Beispiel als ein aus zwei Schenkeln und einer Druckfeder bestehender Federzinken ausgeführt ist. Über eine Schraubverbindung ist der Federzinken mit dem Tragarm eines Rechkreisels des Wenders (4) bzw. Schwaders (5) verbunden. Der erfindungsgemäße Zinken (25) verfügt über eine isolierende Ummantelung (26). Einenends und anderenends von dem Metallkern (27) des Zinkens (25) führen isolierte Kabel (28) zu der Sendeeinheit (10) der landwirtschaftlichen Arbeitsmaschine (1, 2). Wenn man an die in bevorzugter Weise innerhalb des Tragarms verlaufende Leitung (28) eine Stromquelle (29) anschließt, und den Stromfluss in bekannter Weise messtechnisch überwacht, so kann man aus dem Unterbrechen des Stromflusses auf einen Bruch bzw. den Verlust des Zinkens (25) schließen. Nach dem Feststellen eines solchen Ereignisses wird ein Signal (22) generiert, das dann in der schon oben beschriebenen Weise empfangen und weiterverarbeitet wird. Der Vorteil dieser Ausführungsform besteht darin, dass der Schaden genau lokalisiert und auch ein entsprechendes Signal (22) an den Benutzer der zu Schaden gekommenen landwirtschaftlichen Arbeitsmaschine (1, 2) gesendet werden kann.

Alternativ hierzu kann auch ein Zinken (25) verwendet werden, der über einen Kern verfügt, in dem ein isoliertes Kabel (28) von oben nach unten und von unten wieder nach oben geführt und dann wieder an das Messgerät (30), bei dem es sich im einfachsten Fall um ein Widerstandsmessgerät handelt, den Signalgeber (12) und die Stromquelle (29) angeschlossen wird.

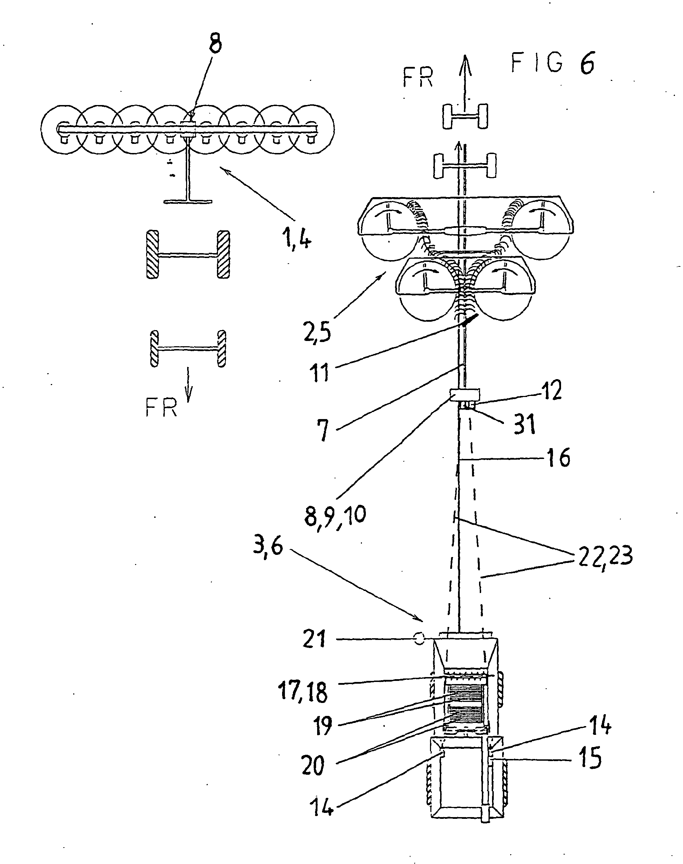

Figur 6 zeigt eine landwirtschaftliche Arbeitsmaschine (2), nämlich einen Schwader (5), die in ihrem rückwärtigen Bereich, wie bereits beschrieben, über eine Haltevorrichtung (7) für ein Detektiersystem (8) mit einem Signalgeber (12) verfügt. Der Signalgeber (12) generiert ein Signal (22), das zunächst in einem ebenfalls an dem Schwader (5) lokalisierten Datenspeichermedium (31) gespeichert wird. Das Signal (22) wird an einem durch den Benutzer frei wählbaren Ort und zu einem frei wählbaren Zeitpunkt auf die Empfangseinheit (14) der wenigstens einen weiteren landwirtschaftlichen Arbeitsmaschine (3), beispielsweise des Feldhäckslers (6) übertragen, und zur Steuerung zumindest eines Teils ihrer Arbeitsorgane (17) verwendet. Die Übertragung kann durch den Transfer des Datenspeichermediums (31) oder auch durch eine Übertragung eines Signals durch elektromagnetische Wellen von dem mit einer Sendeeinheit (12) versehenen Datenspeichermedium (31) auf die Signalempfangseinheit (14) erfolgen.

Es liegt im Rahmen der Erfindung, dass zu der Signalübertragung elektromagnetische Wellen genutzt werden. Das schließt auch Ultraschall, Licht und dergleichen mit ein. Als Signalempfangsemheit können auch die Sinnesorgane des Benutzers dienen.
Die Erfindung ist nicht auf die dargestellten Ausführungsformen beschränkt. Die beschriebenen Effekte können bei beliebigen landwirtschaftlichen Maschinen erzielt werden, bei denen eine landwirtschaftliche Arbeitsmaschine wenigstens einer weiteren im Bearbeitungsablauf vorgeordnet ist.

### Bezugszeichenliste

- 1: landwirtschaftliche Arbeitsmaschine
- 2: landwirtschaftliche Arbeitsmaschine
- 3: landwirtschaftliche Arbeitsmaschine
- 4: Wender -
- 5: Schwader
- 6: Feldhäcksler
- 7: Haltevorrichtung
- 8: Detektiereinrichtung
- 9: Fremdkörperortungseinrichtung
- 10: Metalldetektor
- 11: Fremdkörper
- 12: Signalgeber/Sendeeinheit
- 13: Satellit
- 14: Signalempfangseinheit
- 15: Auswerteeinheit
- 16: Steuerungs- und/oder Regelungsvorgang
- 17: Steuerbare Arbeitsorgane
- 18: Aufsammeleinrichtung
- 19: Einzugsorgane
- 20: Arbeitsaggregate
- 21: Elektromagnet
- 22: Signal
- 23: Funksignal
- 24: potentiell schädigendes Bauteil
- 25: Zinken
- 26: isolierende Ummantelung
- 27: Metallkern
- 28: isoliertes Kabel
- 29: Stromquelle
- 30: Messgerät
- 31: Datenspeichermedium
- 32:
- 33:
- 34:
- 35:
- 36:
- 37:
- 38:
- 39:
- 40:
- 41:
- 42:
- 43:
- 44:
- 45:
- 46:
- 47:
- 48:
- 49:
- 50:
- 51:
- 52:
- 53:
- 54:
- 55:
- 56:
- 57:
- 58:
- 59:
- 60:

## Patentansprüche

1. Verfahren zum Schutz der Arbeitsaggregate (20) wenigstens einer landwirtschaftlichen Arbeitsmaschine (3) vor schädigenden Fremdkörpern (11, 23) und wenigstens einer der landwirtschaftlichen Arbeitsmaschine (3) vorgeordneten weiteren landwirtschaftlichen Arbeitsmaschine (1, 2) mit einem Detektiersystem (8) zur Fremdkörperortung
**dadurch gekennzeichnet,**
**dass** wenigstens eine erste landwirtschaftliche Arbeitsmaschine (1, 2) ein Detektiersystem (8) mit Signalgeber (12) aufweist und der Signalgeber (12) ein Signal (22) generiert, welches drahtlos übertragbar auf die wenigstens eine Empfangseinheit (14) der wenigstens einen weiteren landwirtschaftlichen Arbeitsmaschine (3) von dieser zur Steuerung zumindest eines Teils ihrer Arbeitsorgane (17) genutzt wird.

2. Verfahren nach Anspruch 1,
**dadurch gekennzeichnet,**
**dass** die wenigstens eine erste landwirtschaftliche Arbeitsmaschine (1, 2) eine Emtegutbearbeitungseinrichtung wie z. B. ein Wender (4) oder Schwader (5) ist.

3. Verfahren nach einem oder mehreren der vorhergehenden Ansprüche,
**dadurch gekennzeichnet,**
**dass** die nachgeordnete landwirtschaftliche Arbeitsmaschine (3) über Einrichtungen zur Aufnahme (18) und Weiterverarbeitung (20) des Erntegutes verfügt.

4. Verfahren nach einem oder mehreren der vorhergehenden Ansprüche,
**dadurch gekennzeichnet,**
**dass** das Detektiersystem (8) eine Fremdkörperortungseinrichtung (9) ist.

5. Verfahren nach einem oder mehreren der vorhergehenden Ansprüche,
**dadurch gekennzeichnet,**
**dass** das von dem Signalgeber (12) gesendete Signal (22) drahtlos übertragen wird.

6. Verfahren nach einem oder mehreren der vorhergehenden Ansprüche,
**dadurch gekennzeichnet,**
**dass** das Signal (22) ein positionsabhängiges Signal ist.

7. Verfahren nach einem oder mehreren der vorhergehenden Ansprüche,
**dadurch gekennzeichnet,**
**dass** die Empfangseinheit (14) eine an sich bekannte Empfangs- und Auswerteeinheit ist.

8. Verfahren nach einem oder mehreren der vorhergehenden Ansprüche,
**dadurch gekennzeichnet,**
**dass** die steuerbaren Arbeitsorgane (17) Aufnahmeeinrichtungen (18) sind, die über eine durch das Signal (22) ausgelöste selbsttätige Steuerung verfügen.

9. Vorrichtung zur Nutzung des Verfahrens nach den vorhergehenden Ansprüchen zum Schutz der Arbeitsaggregate (20) wenigstens einer landwirtschaft-lichen Arbeitsmaschine (3) vor schädigenden Fremdkörpern (11, 23) und wenigstens einer der landwirtschaftlichen Arbeitsmaschine (3) vorgeordneten landwirtschaftlichen weiteren Arbeitsmaschine (1, 2) mit einem Detektiersystem (8) zur Fremdkörperortung,
**dadurch gekennzeichnet,**
**dass** an mindestens einer der landwirtschaftlichen Arbeitsmaschinen (1, 2) wenigstens ein Signalgeber (12) vorhanden ist, der mindestens ein Signal (22) generiert, das direkt oder indirekt und drathlos auf den Signalempfangseinheit (14) an der wenigstens einen landwirtschaftlichen Arbeitmaschine (3) übertragen werden kann.

10. Vorrichtung nach Anspruch 9,
**dadurch gekennzeichnet,**
**dass** das Signal (22) ein Positionssignal ist.

11. Vorrichtung nach einem oder mehreren der vorhergehenden Ansprüche,
**dadurch gekennzeichnet,**
**dass** das von der mindestens einen landwirtschaftlichen Arbeitsmaschine (1, 2) wenigstens eine generierte Signal (22) an der landwirtschaftlichen Arbeitmaschine (3) wenigstens einen Steuerungsvorgang und/oder mindestens einen Regelungsvorgang (16) auslösen kann.

12. Vorrichtung nach einem oder mehreren der vorhergehenden Ansprüche,
**dadurch gekennzeichnet,**
**dass** der wenigstens eine Steuerungsvorgang und/oder mindestens eine Regelungsvorgang (16) das zeitlich und räumlich auf den Ursprungsort des Signals (22) abgestimmte Einschalten eines Elektromagneten (21) bewirkt.

13. Vorrichtung nach einem oder mehreren der vorhergehenden Ansprüche,
**dadurch gekennzeichnet,**
**dass** die Signalverarbeitung des mindestens einen Steuerungs- und/oder Regelungsvorganges (16) eine Lernphase beinhaltet.

14. Vorrichtung nach einem oder mehreren der vorhergehenden Ansprüche,
**dadurch gekennzeichnet,**
**dass** die die landwirtschaftliche Arbeitsmaschine (3) schädigenden Teile (11, 23) der wenigstens einen landwirtschaftlichen Arbeitsmaschine (1, 2) mit einem nicht-leitenden Material ummantelt (26) sind.

15. Vorrichtung nach einem oder mehreren der vorhergehenden Ansprüche,
**dadurch gekennzeichnet,**
**dass** die stromleitendenden Teile (27) der die landwirtschaftliche Arbeitsmaschine (3) schädigenden Teile (11, 23) mittels stromführender Leitungen (28) mit der Sendeeinheit (12) verbunden sind.

16. Vorrichtung nach einem oder mehreren der vorhergehenden Ansprüche,
**dadurch gekennzeichnet,**
**dass** bei einem Unterbrechen der stromführenden Leitung (28) mindestens ein Signal (22) an die landwirtschaftliche Arbeitmaschine (3) gesendet wird.

17. Vorrichtung nach einem oder mehreren der vorhergehenden Ansprüche,
**dadurch gekennzeichnet,**
**dass** das Signal (22) ein Funksignal (23) ist.

18. Vorrichtung nach einem oder mehreren der vorhergehenden Ansprüche,
**dadurch gekennzeichnet,**
**dass** an der landwirtschaftlichen Arbeitsmaschine (3) wenigstens zwei räumlich von einander getrennte Signalempfangseinheiten (14) vorhanden sind, so dass die Position des Signals (22) bestimmt werden kann.

19. Vorrichtung nach einem oder mehreren der vorhergehenden Ansprüche 9 und 18,
**dadurch gekennzeichnet,**
**dass** das Signal (22) ein GPS-Signal ist.

## Claims

1. A method of protecting the working implements (20) of at least one agricultural working machine (3) from damaging foreign bodies (11, 23) and at least one further agricultural working machine (1, 2) arranged in front of the agricultural working machine (3), comprising a detecting system (8) for foreign body detection,
**characterised in that**
at least one first agricultural working machine (1, 2) has a detecting system (8) with a signalling device (12) and the signalling device (12) generates a signal (22) which wirelessly transmissible to the at least one receiving unit (14) of the at least one further agricultural working machine (3) is used by same for controlling at least a part of its working members (17).

2. A method according to claim 1 **characterised in that** the at least one first agricultural working machine (1, 2) is a crop material processing apparatus, such as for example a turning device (4) or a windrower (5).

3. A method according to one or more of the preceding claims **characterised in that** the subsequently arranged agricultural working machine (3) has devices for picking up (18) and further processing (20) the crop material.

4. A method according to one or more of the preceding claims **characterised in that** the detecting system (8) is a foreign body detecting device (9).

5. A method according to one or more of the preceding claims **characterised in that** the signal (22) transmitted by the signalling device (12) is transmitted wirelessly.

6. A method according to one or more of the preceding claims **characterised in that** the signal (22) is a position-dependent signal.

7. A method according to one or more of the preceding claims **characterised in that** the receiving unit (14) is a per se known receiving and evaluation unit.

8. A method according to one or more of the preceding claims **characterised in that** the controllable working members (17) are pick up devices (18) which have an automatic control triggered by the signal (22).

9. Apparatus for using the method according to the preceding claims for protecting the working implements (20) of at least one agricultural working machine (3) from damaging foreign bodies (11, 23) and at least one further agricultural working machine (1, 2) arranged in front of the agricultural working machine (3), comprising a detecting system (8) for foreign body detection, **characterised in that**
provided at at least one of the agricultural working machines (1, 2) is at least one signalling device (12) which generates at least one signal (22) which can be transmitted directly or indirectly and wirelessly to the signal receiving unit (14) at the at least one agricultural working machine (3).

10. Apparatus according to claim 9 **characterised in that** the signal (22) is a position signal.

11. Apparatus according to one or more of the preceding claims **characterised in that** the at least one signal (22) generated by the at least one agricultural working machine (1, 2) can trigger on the agricultural working machine (3) at least one control operation and/or at least one regulating operation (16).

12. Apparatus according to one or more of the preceding claims **characterised in that** the at least one control operation and/or at least one regulating operation (16) causes an electromagnet (21) to be switched on in matched relationship in respect of time and space with the location of origin of the signal (22).

13. Apparatus according to one or more of the preceding claims **characterised in that** signal processing of the at least one control and/or regulating operation (16) includes a learning phase.

14. Apparatus according to one or more of the preceding claims **characterised in that** the parts (11, 23) of the at least one agricultural working machine (1, 2), which damage the agricultural working machine (3), are encased (26) with a non-conducting material.

15. Apparatus according to one or more of the preceding claims **characterised in that** the current-conducting parts (27) of the parts (11, 23) which damage the agricultural working machine (3) are connected by means of current-carrying lines (28) to the transmitting unit (12).

16. Apparatus according to one or more of the preceding claims **characterised in that** upon an interruption in the current-carrying line (28) at least one signal (22) is sent to the agricultural working machine (3).

17. Apparatus according to one or more of the preceding claims **characterised in that** the signal (22) is a radio signal (23).

18. Apparatus according to one or more of the preceding claims **characterised in that** at least two signal receiving units (14) which are spatially separate from each other are provided on the agricultural working machine (3) so that the position of the signal (22) can be determined.

19. Apparatus according to one or more of claims 9 and 18 **characterised in that** the signal (22) is a GPS signal.

## Revendications

1. Procédé de protection des outils de travail (20) d'au moins une machine de travail agricole (3) contre des corps étrangers (11, 23) constituant un danger pour la machine et d'au moins une machine de travail agricole (1, 2) supplémentaire placée devant la machine de travail agricole (3), avec un système de détection (8) pour localiser les corps étrangers, **caractérisé par le fait qu'**au moins une première machine de travail agricole (3) comporte un système de détection (8) avec un capteur (12) et que le capteur (12) génère un signal (22) qui peut être transmis par voie sans fil à l'unité de réception (14), au nombre d'au moins une, de la machine de travail agricole (3) supplémentaire, au nombre d'au moins une, et est utilisé par cette dernière pour commander au moins une partie de ses organes de travail (17).

2. Procédé selon la revendication 1, **caractérisé par le fait que** la machine de travail agricole (1, 2), au nombre d'au moins une, est un dispositif de traitement du produit récolté, comme par exemple une faneuse (4) ou une andaineuse (5).

3. Procédé selon une ou plusieurs des revendications précédentes, **caractérisé par le fait que** la machine de travail agricole (3) associée dispose de dispositifs pour le ramassage (18) et le traitement (20) du produit récolté.

4. Procédé selon une ou plusieurs des revendications précédentes, **caractérisé par le fait que** le système de détection (8) est un dispositif de localisation de corps étrangers (9).

5. Procédé selon une ou plusieurs des revendications précédentes, **caractérisé par le fait que** le signal (22) émis par le capteur de signal (12) est transmis par voie sans fil.

6. Procédé selon une ou plusieurs des revendications précédentes, **caractérisé par le fait que** le signal (22) est un signal dépendant de la position.

7. Procédé selon une ou plusieurs des revendications précédentes, **caractérisé par le fait que** l'unité de réception (14) est une unité de réception et d'exploitation connue en soi.

8. Procédé selon une ou plusieurs des revendications précédentes, **caractérisé par le fait que** les organes de travail (17) commandés sont des dispositifs de ramassage (18), qui disposent d'une commande automatique déclenchée par le signal (22).

9. Dispositif pour la mise en oeuvre du procédé selon une des revendications précédentes pour la protection des outils de travail (20) d'au moins une machine de travail agricole (3) contre des corps étrangers (11, 23) constituant un danger pour la machine et d'au moins une machine de travail agricole (1, 2) supplémentaire placée devant la machine de travail agricole (3), avec un système de détection (8) pour localiser les corps étrangers, **caractérisé par le fait qu'**il est prévu sur au moins une des machines de travail agricole (1, 2), au moins un capteur (12) qui génère un signal (22) qui peut être transmis de manière directe ou indirecte et par voie sans fil à l'unité de réception de signal (14) sur la machine de travail agricole (3), au nombre d'au moins une.

10. Dispositif selon la revendication 1, **caractérisé par le fait que** le signal (22) est un signal de position.

11. Dispositif selon une ou plusieurs des revendications précédentes, **caractérisé par le fait que** le signal (22), au nombre d'au moins un, généré par la machine de travail agricole (1, 2), au nombre d'au moins une, peut déclencher au moins une action de commande et/ou au moins une action de réglage (16) sur la machine de travail agricole (3).

12. Dispositif selon une ou plusieurs des revendications précédentes, **caractérisé par le fait que** l'action de commande, au nombre d'au moins une, et/ou l'action de réglage (16), au nombre d'au moins une, provoque la coupure d'un électro-aimant (21), adaptée dans le temps et dans l'espace en fonction de l'emplacement d'origine du signal (22).

13. Dispositif selon une ou plusieurs des revendications précédentes, **caractérisé par le fait que** le traitement de signal de l'action de commande, au nombre d'au moins une, et/ou de l'action de réglage (16), au nombre d'au moins une, comporte au moins une phase d'apprentissage.

14. Dispositif selon une ou plusieurs des revendications précédentes, **caractérisé par le fait que** les éléments (11, 23) de la machine de travail agricole (1, 2), au nombre d'au moins une, susceptibles d'endommager la machine de travail agricole (3) sont revêtus (26) d'un matériau non conducteur.

15. Dispositif selon une ou plusieurs des revendications précédentes, **caractérisé par le fait que** les éléments (27) conducteurs parmi les éléments (11, 23) susceptibles d'endommager la machine de travail agricole (3) sont reliés à l'unité d'émission (12) au moyen de lignes conductrices de courant électrique (28).

16. Dispositif selon une ou plusieurs des revendications précédentes, **caractérisé par le fait qu'**au moins un signal (22) est envoyé à la machine de travail agricole (3) en cas de coupure des lignes conductrices de courant électrique (28).

17. Dispositif selon une ou plusieurs des revendications précédentes, **caractérisé par le fait que** le signal (22) est un signal radio (23).

18. Dispositif selon une ou plusieurs des revendications précédentes, **caractérisé par le fait qu'**il est prévu sur la machine de travail agricole (3) au moins deux unités de réception de signal (14) séparées l'une de l'autre dans l'espace, de telle sorte que la position du signal (22) peut être déterminée.

19. Dispositif selon une ou plusieurs des revendications 9 et 18, **caractérisé par le fait que** le signal (22) est un signal GPS.
